# EUROPÄISCHE PATENTSCHRIFT

(11) **EP 2 194 356 B1**
(45) Veröffentlichungstag und Bekanntmachung des Hinweises auf die Patenterteilung: **01.08.2012**
(21) Anmeldenummer: 09177965.2
(22) Anmeldetag: 04.12.2009
(51) Int. Cl.: G01B 9/023, G01B 11/06, G01B 11/24

(54) **Optisches Messgerät**
Optical measuring device
Appareil de mesure optique

(30) Priorität: 05.12.2008 DE 102008044375
(43) Veröffentlichungstag der Anmeldung: 09.06.2010
(73) Patentinhaber: Robert Bosch GmbH, 70442 Stuttgart (DE)
(72) Erfinder: Straehle, Jochen, 71287, Weissach (DE); Rath, Steffen, 71254, Ditzingen (DE)

(56) Entgegenhaltungen:
- EP-A1- 2 301 423
- GHIM Y, YOU J, KIM S: "Dispersive white-light interferometry for 3-D inspection of thin-film layers of flat panel displays" PROC. OF SPIE, Bd. 6616, 18. Juni 2007 (2007-06-18), XP040242428 DOI: 10.1117/12.726040
- GHIM YOUNG-SIK ET AL: "Fast, precise, tomographic measurements of thin films" APPLIED PHYSICS LETTERS, AIP, AMERICAN INSTITUTE OF PHYSICS, MELVILLE, NY, US LNKD- DOI:10.1063/1.2776015, Bd. 91, Nr. 9, 27. August 2007 (2007-08-27), Seiten 91903-91903, XP012100850 ISSN: 0003-6951
- DAESUK KIM ET AL: "RAPID COMMUNICATION; Fast thickness profile measurement using a peak detection method based on an acousto-optic tunable filter; Rapid Communication" MEASUREMENT SCIENCE AND TECHNOLOGY, IOP, BRISTOL, GB LNKD- DOI:10.1088/0957-0233/13/7/101, Bd. 13, Nr. 7, 1. Juli 2002 (2002-07-01), Seiten L1-L5, XP020063565 ISSN: 0957-0233

## Beschreibung

### Stand der Technik

Die Erfindung betrifft ein Verfahren zur Bestimmung der Oberflächentopografie eines beschichteten Objektes und zur gleichzeitigen ortsaufgelösten Bestimmung der Dicke der Schicht auf dem beschichteten Objekt.

Die Erfindung betrifft weiterhin ein optisches Messgerät zur Bestimmung der Oberflächentopografie eines beschichteten Objektes und zur gleichzeitigen ortsaufgelösten Bestimmung der Dicke der Schicht auf dem beschichteten Objekt.

Die hochpräzise Vermessung von Oberflächen mittels Weißlichtinterferometrie ist beispielsweise in der Dieseleinspritztechnologie ein Standardmessverfahren, um Oberflächen von Bauteilen zu prüfen.

Grundlegende Ausführungen zur Weißlichtinterferometrie sind in T. Dresel, G. Häusler, H. Venzke, "Three-dimensional sensing of rough surfaces by coherence radar", Applied Optics Vol. 31, 919, 1992 und in P. de Groot et L. Deck, Journal of Modern Optics, "Surface profiling by analysis of white-light interferograms in the spatial frequency domain", Journal of Modern Optics, Vol. 42 389-501, 1995 dargestellt.

Des Weiteren kann die Weißlichtinterferometrie zur Bestimmung der Dicke von für die verwendete Strahlung transparenten Schichten eingesetzt werden.

In der Schrift DE 10 2006 016 131 A1 ist eine interferometrische Messvorrichtung zum Vermessen von Schichtdicken von teiltransparenten Schichten auf Substraten mit einer diese automatisch in ihrer Tiefenrichtung (Z) abtastenden Abtastvorrichtung, mittels derer eine Interferenzebene (IE) relativ zur Schichtstruktur verschiebbar ist, mit einem ein Weißlichtinterferometer (WLI) und/oder ein wellenlängenscannendes Interferometer (WLSI) aufweisenden Interferometerteil (IT), dem für die Messung von einer Einstrahlungseinheit (LQ) eine Eingangsstrahlung zugeführt ist, welche mittels eines Strahlteilers (ST) aufgeteilt und zum einen Teil über einen Referenzstrahlengang als Referenzstrahl (RST) einem Referenzarm (RA) und zum anderen Teil über einen Objektestrahlengang als Objektestrahl (OST) einem beim Messen die Schichtstruktur aufweisenden Objektarm (OA) zugeführt ist, mit einem Bildaufnehmer (BA), der die aus dem Referenzarm (RA) und dem Objektarm (OA) zurückkommende interferierende Strahlung aufnimmt und in elektrische Signale umwandelt, sowie mit einer nachgeordneten Auswerteeinrichtung (AW) zum Bereitstellen der Messergebnisse, beschrieben. Dabei ist es vorgesehen, dass die Abtastvorrichtung in der Weise ausgebildet ist, dass bei gleich bleibendem Referenzstrahlengang und Objektestrahlengang der zugehörige Abtastweg zumindest so groß ausgeführt ist wie der zu erwartende oder in einer Vormessung ermittelte Abstand mindestens zweier hintereinander angeordneter zu erfassender Grenzflächen der Schichtstruktur gegebenenfalls zuzüglich einer zu erwartenden Tiefenstruktur der Grenzflächen, und dass
a) bei Ausbildung des interferometerteils (IT) mit der Einstrahlungseinheit (LQ) als Weißlichtinterferometer (WLI) die Kohärenzlänge (LC) der Eingangsstrahlung höchstens so groß gewählt ist, dass die Interferenzmaxima der bei der Tiefenabtastung hintereinander auftretenden Korrelogramme an den zu erfassenden Grenzflächen unterscheidbar sind, und / oder
b) bei Ausbildung des Interferometerteils (IT) mit der Einstrahlungseinheit als welleniängenscannendes Interferometer (WLSI) die Einstrahlungseinheit (LQ) mit schmalbandiger, durchstimmbarer Eingangsstrahlung ausgebildet ist, wobei die Bandbreite der Eingangsstrahlung so groß gewählt ist, dass der kleinste zu erwartende oder durch die Vormessung abgeschätzte Abstand der zu erfassenden hintereinander liegenden Grenzflächen auslösbar ist, und / oder
c) bei Ausbildung des interferometerteils (IT) als wellenlängenscannendes Interferometer (WLSI) mit spektral breitbandiger Einstrahlungseinheit und einem wellenlängenscannenden optischen Spektrumanalysator als Detektor die Bandbreite der Eingangsstrahlung so groß gewählt ist, dass der kleinste zu erwartende oder durch Vormessung abgeschätzte Abstand der zu erfassenden hintereinander liegenden Grenzflächen auflösbar ist, und
d) das verwendete Wellenlängenspektrum der Einstrahleinheit (LQ) hinsichtlich der spektralen Transparenz der zu messenden Schicht angepasst ist, derart, dass diese zumindest teilweise durchstrahlbar ist.

Die Schrift DE 10 2006 016 131 A1 beschreibt weiterhin ein Verfahren zum interferometrischen Vermessen von Schichtdicken von teiltransparenten Schichten auf Substraten, bei dem eine Interferenzebene (IE), die durch die optische Weglänge eines in einem Objektestrahlengang geführten Objektestrahls (OST) und durch die optische Weglänge eines in einem Referenzstrahlengang geführten Referenzstrahls (RST) bestimmt ist, zur Tiefenabtastung der Schichtstruktur in Tiefenrichtung (Z) relativ zur Lage der Schicht verschoben wird, ein Interferenzmuster mit Methoden der Weißlichtinterferometrie oder einer wellenlängenscannenden Interferometrie erzeugt und das Interferenzmuster mittels eines Bildaufnehmers (BA) aufgenommen und mittels einer Auswerteeinrichtung (AW) automatisch ausgewertet wird, um die Grenzflächen der Schichtstruktur betreffende Messergebnisse darzustellen. Dabei ist es vorgesehen, dass bei der Tiefenabtastung der zu vermessenden Schicht und der sie begrenzenden Grenzflächen der Objektestrahl (OST) in einem Abtastzyklus über desselben Objektestrahlengang geführt wird und der Referenzstrahl (RST) über denselben ReferenzStrahlengang geführt wird und dass bei der Anwendung der Methode der Weißlichtinterferometrie die Kohärenzlänge (LC) der in das Interferometer eingekoppelten Eingangsstrahlung einer Einstrahleinheit (LQ) höchstens so groß gewählt wird, dass die Interferenzmaxima der bei der Tiefenabtastung hintereinander an den zu erfassenden Grenzflächen auftretenden Korrelogramme (KG) unterschieden werden und bei der Anwendung der Methode der wellenlängenscannenden Interferometrie die Bandbreite der Eingangsstrahlung so groß gewählt wird, dass der kleinste zu erwartende oder durch Vormessung abgeschätzte Abstand der zu erfassenden Grenzflächen aufgelöst wird, wobei ein Wellenlängenspektrum der Einstrahleinheit (LQ) gewählt wird, bei dem die zu messende Schicht zumindest teilweise durchstrahlt werden kann.

Bei der interferometrischen Messeinrichtung und zur Durchführung des Verfahrens müssen Doppelkorrelogramme von der von der Schichtoberfläche und der Schichtrückseite reflektierten Strahlung ausgewertet werden. Nachteilig ist dabei, dass nur Schichten ab etwa 2µm Dicke vermessen werden können, da sonst die Überlagerung der Korrelogramme nicht mehr trennbar ist.

Weiterhin nachteilig ist, dass nur die Dicken von für das verwendete Licht oder die verwendete elektromagnetische Strahlung transparenten oder zumindest teiltransparenten Schichten gemessen werden können. Für die Messung der Schichtdicke von auf Kohlenstoff basierenden Verschleißschutzschichten, so genannte C-Schichten, ist in der Schrift DE 10 2006 016 131 A1 daher vorgeschlagen, dass das Wellenlängenspektrum der Einstrahleinheit LQ im Bereich von 1100 nm bis 1800 nm liegt. In diesem Wellenlängenbereich sind die C-Schichten aufgrund ihrer optischen Eigenschaften teiltransparent, wodurch sowohl an der Oberseite (Grenzfläche Luft / C-Schicht) als auch an der Unterseite der Schicht (Grenzfläche C-Schicht / Substrat) ein Korrelogramm entstehen kann, welches detektiert werden kann. Dabei gilt auch hier die Einschränkung, dass nur Schichten ab etwa 2µm Dicke vermessen werden können, da sonst die Überlagerung der Korrelogramme nicht mehr trennbar ist. Weiterhin ist es erforderlich, dass die Schicht einen ausreichenden Teil der Strahlung an der Oberfläche reflektiert und einen ausreichenden Teil durchlässt, was eine genaue Anpassung der verwendeten Wellenlänge und der Messeinrichtung auf die Schichteigenschaften erfordert.

Ferner ist aus dem Fachartikel "Dispersive white-light interferometry für 3-D inspection of thin-film layers of flat panel displays" (Autoren Young-Sik Ghim, Joonho You, Seung-Woo Kim/ Proc. of spie/Bd. 6616/ 18.06.2007, DOI: 10.1117/12.726040) ein Verfahren und ein optisches Messgerät zur gleichzeitigen Bestimmung der Oberflächentopografie und der Schichtdicke eines beschichteten Objekts bekannt. Vorgesehen ist eine Polarisierung der von einer Strahlenquelle ausgesendeten Strahlung. Anschließend wird mittels Polfilter eine getrennte optische Strahlführung und - auswertung von p- und s-polarisierten Strahlungen bewirkt. Dabei wird die p-polarisierte Strahlung zur Bestimmung der Oberflächentopologie mittels Interferometrie und die s-polarisierte Strahlung zur Schichtdickenbestimmung mittels Reflektometrie vorgesehen. Eine Trennung über Wellenlängenbereichen erfolgt nicht.

Es ist daher Aufgabe der Erfindung, ein Verfahren bereitzustellen, mit dem in einem Arbeitsschritt die Schichtdicke und die Tiefenstruktur von beschichteten Oberflächen hochgenau vermessen werden kann.

Es ist weiterhin Aufgabe der Erfindung, ein entsprechendes optisches Messgerät bereitzustellen.

### Offenbarung der Erfindung

Die das Verfahren betreffende Aufgabe der Erfindung wird dadurch gelöst, dass die Oberflächentopografie mittels Weißlichtinterferometrie gemessen wird, dass die Dicke der Schicht nach dem Prinzip der Reflektometrie gemessen wird und dass für beide Messungen eine gemeinsame Strahlungsquelle mit einem elektromagnetischen Strahlungsspektrum verwendet wird, welches in einem in dem Strahlungsspektrum enthaltenen ersten Wellenlängenbereich von der Schichtoberfläche reflektiert wird und welches in einem in dem Strahlungsspektrum enthaltenen zweiten Wellenlängenbereich in die Schicht eindring, und dass die elektromagnetische Strahlung (40) des ersten und des zweiten Wellenlängenbereichs (53, 54) innerhalb eines als eine Kombination aus einem Weißlichtinterferometer(20) und einem Reflektometer (30) ausgeführten optischen Messgeräts (10) in gemeinsamen Strahlengängen in einem Messarm (16) zu dem beschichteten Objekt (18) und in einem Referenzarm (14) zu einem Referenzspiegel (15) geführt wird, dass die von dem beschichteten Objekt (18) reflektierte elektromagnetische Strahlung (40) und die von dem Referenzspiegel (15) reflekktierte elektromagnetische Strahlung (40) vereint und einem ersten optischen Element (12) zugeführt wird, dass die Strahlung des ersten Wellenlängenbereichs (53) und des zweiten Wellenlängenbereichs (54) von dem ersten optischen Element (12) getrennt und in unterschiedliche Strahlengänge (21, 31) gelenkt wird, wobei die Strahlung des ersten Wellenlängenbereichs (53) in einem ersten Strahlengang (21) zur Messung der Oberflächentopologie und die Strahlung des zweiten Wellenlängenbereichs (54) in einem zweiten Strahlengang (31) zur Bestimmung der Schichtdicke vorgesehen ist.

Die das optische Messgerät betreffende Aufgabe der Erfindung wird dadurch gelöst, dass das optische Messgerät als Kombination aus einem Weißlichtinterferometer und einem Reflektometer mit einer gemeinsamen Strahlungsquelle und einem gemeinsamen Messarm aufgebaut ist, über den die elektromagnetische Strahlung dem beschichteten Objekt zugeführt ist, dass die Strahlungsquelle ein elektromagnetisches Strahlungsspektrum aufweist, welches in einem in dem Strahlungsspektrum enthaltenen ersten Wellenlängenbereich von der Schichtoberfläche reflektiert wird und welches in einem in dem Strahlungsspektrum enthaltenen zweiten Wellenlängenbereich zumindest teilsweise in die Schicht eindringt und dass ein erstes optisches Element zur Aufteilung der von dem beschichteten Objekt und einem Referenzspiegel reflektierten und anschließend überlagerten elektromagnetischen Strahlung des ersten Wellenlängenbereichs in einen ersten Strahlengang zur Messung der Oberflächentopografie und des zweiten Wellenlängenbereichs in einen zweiten Strahlengang zur Bestimmung der Schichtdicke vorgesehen ist.

Die Verwendung des ersten, von der Schicht reflektierten Wellenlängenbereichs der elektromagnetischen Strahlung ermöglicht die Messung der Oberflächentopografie des Objektes auf Basis der Weißlichtinterfermetrie. Die Verwendung des zweiten, in die Schicht eindringenden Wellenlängenbereichs der elektromagnetischen Strahlung ermögficht hingegen die Messung der Schichtdicke auf Basis der Reflektometrie.

Mit der Weißlichtinterferometrie kann eine hochgenaue Messung der Oberflächentopografie des Objektes durchgeführt werden. Mittels der Reflektometrie kann die Schichtdicke sehr genau bestimmt werden. Dabei unterliegt die Schichtdickenbestimmung auf Basis der Reflektometrie nicht der für die Schichtdickemessung mittels Weißlichtinterferometrie gültigen Einschränkung, nach der auf Grund von überlagernden, nicht mehr trennbaren Doppelkorrelogrammen die minimal zu bestimmende Schichtdicke auf etwa 2µm beschränkt ist.

Mit dem Verfahren und dem optischen Messgerät können in einem Arbeitsschritt sowohl die Oberflächentopografie eines beschichteten Objektes wie auch die Schichtdicke hochgenau und flächig bestimmt werden.

Durch geeignete Wahl der Wellenlängenbereiche kann das optische Messgerät optimal an die optischen Eigenschaften der zu untersuchende Schicht und des beschichteten Objektes angepasst werden. Dabei kann für die Weißlichtinterferometrie ein erster Wellenlängen bereich vorgesehen sein, der gut von der Schicht reflektiert wird und nicht in die Schicht eindringt, während für die Schichtdickenmessung ein zweiter Wellenlängenbereich ausgewählt wird, in dem die Schicht transparent ist und nur ein Teil der Strahlung von der Schichtoberfläche reflektiert wird.

Für die Strahlführung in dem optischen Messgerät sind vor der Aufteilung der elektromagnetischen Strahlung in den ersten Strahlengang zur Messung der Oberflächentopografie und den zweiten Strahlengang zur Bestimmung der Schichtdicke die gleichen optischen Elemente verwendet, was einen günstigen Aufbau des optischen Messgerätes und eine exakte örtliche Zuordnung der Ergebnisse der Weißlicht-Interferenzmessung und der reflektometrischen Messung ermöglicht.

Die zeitgleiche Messung der Oberflächentopografie und der Schichtdicke bei Verwendung einer Strahlungsquelle wird dadurch erreicht, dass die elektromagnetische Strahlung des ersten und des zweiten Wellenlängenbereichs innerhalb eines als eine Kombination aus einem Weißlichtinterferometer und einem Reflektometer ausgeführten optischen Messgeräts in gemeinsamen Strahlengängen in einem Messarm zu dem beschichteten Objekt und in einem Referenzarm zu einem Referenzspiegei geführt wird, dass die von dem beschichteten Objekt reflektierte elektromagnetische Strahlung und die von dem Referenzspiegel reflektierte elektromagnetische Strahlung vereint und einem ersten optischen Element zugeführt wird, dass die Strahlung des ersten Wellenlängenbereichs und des zweiten Wellenlängenbereichs von dem ersten optischen Element getrennt und in unterschiedliche Strahlengänge gelenkt wird. Außerdem kann der zu dem Weißlichünterferometer gehörende erste Strahlengang des ersten Wellenlängenbereichs einem ersten Kamerachip und der zu dem Reflektometer gehörende zweite Strahlengang des zweiten Wellenlängenbereichs einem zweiten Kamerachip zugeführt werden.

Der erste Kamerachip erfasst die interferierende Strahlung des ersten Wellenlängenbereichs, also des Teils des Spektrums der elektromagnetischen Strahlung, der an der Oberfläche der Schicht reflektiert wird. Dabei kommt es zu einer konstruktiven oder destruktiven Interferenz, wenn die optischen Weglängen in dem Messarm und in dem Referenzarm im Bereich der Kohärenzlänge des Wellenpakets gleich sind. Zur Durchführung der Messung wird der relative Abstand von Referenzspiegel und Objekt verändert. Dadurch kommt es zu einer Modulation der Strahiungsintensitäi an den jeweiligen Pixeln des ersten Kamerachips, auf die ein im Fokusbereich oder im Interferenzbereich des Weißlichtinterferometers liegender Punkt der Objektoberfläche abgebildet ist. Das Maximum der so entstehenden Korrelogramme wird mit der Position der Verschiebeeinheit verrechnet. Dazu wertet eine entsprechende Auswertesoftware die von dem ersten Kamerachip ortsaufgelöst aufgenommenen Korrelogramme und di Position der Verschiebeeinheit aus. Je nach Präzision der Verschiebeeinheit kann der Höhenwert der Oberflächenbereiche des beschichteten Objektes bis auf wenige Nanometer genau bestimmt werden.

Zur ortsaufgelösten Bestimmung der Schichtdicke werden die Signale der einzelnen Pixel des zweiten Kamerachips ausgewertet. Die in die Schicht eindringende elektromagnetische Strahlung des zweiten Wellenlängenbereichs wird sowohl an der Oberfläche der Schicht wie auch an der Grenzfläche zu dem Objekt reflektiert. Der an der Grenzfläche zwischen der Schicht und dem Objekt reflektierte Strahlungsanteil interferiert nach dem Austritt aus der Schicht mit dem an der Oberfläche der Schicht reflektierten Strahlungsanteil. Je nach der Wellenlänge der Strahlung, der Schichtdicke und der optischen Eigenschaften der Schicht kommt es zu einer konstruktiven oder destruktiven Überlagerung der beiden Strahlungsanteüe, was von dem zweiten Kamerachip als entsprechende Intensitätssignale aufgenommen wird. Die Auswertung der Intensitätssignale der einzelnen Pixel des zweiten Kamerachips ermöglicht eine hochgenaue, ortsaufgelöste Bestimmung der Schichtdicke.

Als erstes optisches Element kann ein dichroitisches Prisma verwendet werden. Das dichroitische Prisma erlaubt die wellenlängenabhängige Aufteilung der elektromagnetischen Strahlung in den ersten Strahlengang und in den zweiten Strahlengang.

Entsprechend einer besonders bevorzugten Ausgestaltungsvarianten der Erfindung kann es zur Bestimmung der Schichtdicke vorgesehen sein, dass die Wellenlänge der elektromagnetischen Strahlung in dem zweiten Strahlengang des zweiten ü1r'eflenlängenbereichs vor dem zweiten Kamerachip mit einem zweiten optischen Element durchgestimmt wird. Durch das gleichmäßige Durchstimmen der Wellenlängen der elektromagnetischen Strahlung des zweiten Strahlengangs ändert sich periodisch das frequenzabhängige intensitätssignal an dem zweiten Kamerachip. Anhand dieser Modulation der Intensität lässt sich die Schichtdicke bestimmen. Das zweite optische Element ist nach dem ersten optischen Element angeordnet, so dass die elektromagnetische Strahlung des ersten Wellenlängebereichs zur interferometrischen Bestimmung der Oberflächentopografie von dem zweiten optischen Element nicht beeinflusst wird.

Bevorzugt wird als zweites optisches Element ein durchstimmbarer optischer Filter verwendet.

Eine exakte Bestimmung der Dicke der Schicht aus dem Intensitätsverlauf der Strahlung an dem zweiten Kamerachip wird dadurch ermöglicht, dass bei der Bestimmung der Dicke der Schicht optische Parameter der Schicht berücksichtigt werden. So beeinflusst neben der Schichtdicke beispielsweise der Brechungsindex der Schicht die Phasenlage des an der Grenzfläche zwischen der Schicht und dem Objekt reflektierten Strahlungsanteils relativ zu dem an der Oberfläche der Schicht reflektierten Strahlungsanteil mit entsprechender Auswirkung auf den Intensitätsverlauf der interferierten Strahlung.

Zur ortsaufgelösten Bestimmung der Schichtdicke muss die Oberfläche des Objektes in dem Punkt, in dem die Schichtdickenmessung erfolgt, scharf auf dem zweiten Kamerachip abgebildet sein. Da nicht alle Objektpunkte auf gleicher Ebene liegen, muss zur Durchstimmung der Weilenlänge in dem zweiten Strahlengang das zweite optische Element öfters aktiviert werden. Daher kann es vorgesehen sein, dass das zweite optische Element aktiviert wird, wenn durch die Veränderung der optischen Weglänge in dem Messarm oder in dem Referenzarm zumindest ein Punkt der Oberfläche des beschichteten Objektes in den Fokusbereich oder in den Interferenzbereich des Weißlichtinterferometers rückt. Die Information, dass sich ein Punkt in dem Fokusbereich oder in dem Interferenzbereich des Weißlichtinterferometers befindet, liegt aus der Auswertung des Weißlichtinterferometers vor.

Ist es vorgesehen, dass zur jeweiligen Schichtdickenmessung nur die Pixel des zweiten Kamerachips ausgewertet werden, auf die ein in dem Fokusbereich oder in dem Inierferenzbereich des Weißlichtinterferometers liegender Punkt der Oberfläche des beschichteten Objektes abgebildet ist, so kann eine zeitaufwändige Auswertung des gesamten Bildes bei jeder Ansteuerung des durchstimmbaren zweiten optischen Elements vermieden werden.

Entsprechend einer alternativen Ausgestaltungsvarianten der Erfindung kann es vorgesehen sein, dass die Bestimmung der Dicke der Schicht zu einem Zeitpunkt über das gesamte Bildfeld erfolgt. Dazu ist eine ausreichend tiefenscharfe Abbildung des Objektes auf den zweiten Kamerachip Voraussetzung.

Insbesondere für die Messung der Schichtdicke von auf Kohlenstoff basierenden Verschleißschutzschichten, so genannte C-Schichten, auf Metalloberflächen kann es vorgesehen sein, dass ein Strahlungsspektrum in einem Wellenlängenbereich von 300nm bis 1500nm verwendet wird und dass für die Weißlichtinterferometrie der erste Wellenlängenbereich zwischen 300nm und 900nm und für die Reflektometrie der zweite Wellenlängenbereich zwischen 900nm und 1500nm verwendet wird. Die Kohlenstoffschichten sind in dem ersten, überwiegend im sichtbaren liegenden Wellenlängenbereich zwischen 300nm und 900nm nicht transparent, was die Bestimmung der Oberflächentopografie mittels Weißlichtinterferometrie ermöglicht. Im nahen Infrarotbereich zwischen 900nm und 1500nm sind die C-Schichten auf Grund ihrer optischen Eigenschaften teiltransparent, wodurch sowohl an der Oberseite (Grenzfläche Luft/ C-Schicht) als auch an der Unterseite der Schicht (Grenzfläche C-Schicht / Metalloberfläche) ein Teil der Strahlung reflektiert wird.

Ein geeigneter Aufbau des aus einem Weißlichtinterferometer und einem Reflektometer kombinierten optischen Messgerätes kann dadurch erreicht werden, dass die elektromagnetische Strahlung der Strahlungsquelle einem Strahlteiler zugeführt ist, dass nach dem Strahlteiler ein erster Teil der elektromagnetischen Strahlung in dem Messarm dem beschichteten Objekt und ein zweiter Teil der elektromagnetischen Strahlung in einem Referenzarm dem Referenzspiegel zugeführt ist, dass die von dem beschichteten Objekt und dem Referenzspiegel reflektierte elektromagnetische Strahlung in dem Strahlteiler vereint und dem ersten optischen Element zugeführt ist, dass die elektromagnetische Strahlung des ersten Wellenlängenbereich nach dem ersten optischen Element einem ersten Kamerachip zugeführt ist und dass die elektromagnetische Strahlung des zwelten Wellenlängebereichs nach dem ersten optischen Element einem zweiten optischen Element und anschließend einem zweiten Kamerachip zugeführt ist.

Bis zu dem ersten optischen Element durchlaufen die Strahlung des ersten Wellenlängenbereichs und des zweiten Wellenlängenbereichs die gleichen optischen Wege. Das erste optische Element trennt die beiden Wellenlängenbereiche für die separate Auswertung auf Basis derWeißlichtinterferometrie und der Reflektometrie.

Für die Bestimmung der Oberflächentopografie wird die optische Weglänge zwischen dem Referenzarm und dem Messarm variiert. Bevorzugt wird dabei das beschichtete Objekt bewegt, es ist jedoch auch eine Bewegung des Referenzspiegels oder der Position des Objektives relativ zum beschichteten Objekt möglich. Durch die Bewegung des beschichteten Objektes gelangen die verschiedenen Ebenen der Tiefenstruktur des beschichteten Objektes nacheinander in den Fokusbereich beziehungsweise den Interferenzbereich des Weißlichtinterferometers. Welche Oberflächenbereiche sich in dem Fokusbereich beziehungsweise dem Interferenzbereich des Weißlichtinterferometers befinden, kann aus der Auswertung der Lichtintensität der einzelnen Bildpunkte auf dem ersten Kamerachip ermittelt werden. Durchläuft ein Objektpunkt entsprechend der Kohärenzlänge der verwendeten Strahlung den Interferenz- oder Fokusbereich des Weißlichtinterferometers, so treten an dem entsprechenden Abbildungspunkt auf der Kameraebene durch die mit variierender Objektposition auftretende konstruktive oder destruktive Interferenz abwechselnd hohe und niedrige Strahlungsintensitäten auf, wobei das Maximum der Einhüllenden der Intensitätsschwankungen für die Höhenbestimmung des Objektpunktes verwendet wird. Aus der jeweiligen Position der für die Verschiebung des Objektes vorgesehenen Verschiebeeinheit kann die Höhe des jeweiligen Objektpunktes entsprechend der Positioniergenauigkeit der Verschiebeeinheit hochgenau bestimmt werden.

Da das erste optische Element die Strahlungsanteile der beiden Wellenlängenbereiche trennt, gelangt an den ersten Kamerachip keine von der Grenzfläche zwischen der Schicht und der Objektoberfläche reflektierte Strahlung aus dem zweiten, für die Schicht durchlässigen Wellenlängen bereich, so dass Doppelkorrelogramme vermieden werden.

Für die Bestimmung der Schichtdicke werden die Interferenzen der von der Schichtoberfläche und von der Grenzfläche zwischen der Schicht und der Objektoberfläche reflektierten Strahlungsanteile des zweiten Wellenlängenbereichs mit Hilfe des zweiten Kamerachips ortsaufgelöst ausgewertet. Durch das zweite optische Element kann die zu dem zweiten Kamerachip durchgelassene Wellenlänge kontinuierlich verändert werden. Bei dem gleichmäßigen Durchstimmen der Wellenlänge ändert sich periodisch das frequenzabhängige Intensitätssignal. Anhand der Modulation lässt sich unter Berücksichtigung spezifischer Schichteigenschaften, wie beispielsweise des Brechungsindexes, die Schichtdicke sehr genau bestimmen.

Die Trennung der Wellenlängenbereiche und das Durchstimmen der Wellenlänge vor dem zweiten Kamerachip lässt sich dadurch erreichen, dass das erste optische Element ein dichroitisches Prisma ist und/oder dass das zweite optische Element ein durchstimmbarer optischer Filter ist.

Ist es vorgesehen, dass der erste Kamerachip und/oder der zweite Kamerachip als CMOS-Kamera ausgeführt ist, so können die einzelnen Pixel der Kamerachips separat angesteuert beziehungsweise ausgewertet werden.

Störungen, beispielsweise durch Fremdlicht, können dadurch vermieden werden, dass der erste Kamerachip für den ersten Wellenlängenbereich und der zweite Kamerachip für den zweiten Wellenlängenbereich empfindlich ist.

Entsprechend einer besonders bevorzugten Ausgestaltungsvarianten der Erfindung kann es vorgesehen sein, dass eine Auswertesoftware zur Auswertung der Signale des ersten Kamerachips zur Bestimmung der Oberflächentopografie und eine Schichtdickenanalysesoftware zur Auswertung der Signale des zweiten Kamerachips zur Bestimmung der Dicke der Schicht vorgesehen ist und dass in der Auswertesoftware eine Funktion zur Aktivierung des zweiten optischen Elements vorgesehen ist, wenn zumindest ein Bereich der Oberfläche des beschichteten Objektes in den Interferenzbereich oder in den Fokusbereich des Weißlichtinterferometers rückt, und/oder dass in der Auswertesoftware eine Funktion zur Übertragung der Bildpunkte, welche sich in dem Interferenzbereich oder in dem Fokusbereich des Weißlichtinterferometers befinden, an die Schichtdickenanalysesoftware vorgesehen ist.

Die Messung der Schichtdicke erfolgt vorteilhaft für die Objektpunkte, die sich im Fokusbereich oder im Interferenzbereich des Weißlichtinterferometers befinden. Die Aktivierung des zweiten optischen Elements, sobald zumindest ein Objektpunkt in den Interferenzbereich oder in den Fokusbereich des Weißlichtinterferometers rückt, ermöglicht die Schichtdickenmessung für diesen Objektpunkt. Gleichzeitig wird der Schichtdickenanalysesoftware von der Auswertesoftware vorgegeben, welcher Objektpunkt oder welche Objektpunkte und somit welche Bildpunkte sich gerade im Interferenzbereich oder im Fokusbereich befinden und ausgewertet werden müssen. Bei Verwendung von CMOS-Kameras, mit denen die Kamerapixel einzeln ausgewertet werden können, können so nur die im Fokus liegenden Bildpunkte ausgewertet werden, wodurch eine zeitaufwändige Auswertung des gesamten Bildfeldes vermieden werden kann.

Entsprechend einer alternative Ausgestaltungsvarianten der Erfindung kann es vorgesehen sein, dass zur Abbildung des beschichteten Objektes ein Objektiv mit einer großen Schärfentiefe verwendet ist. Erscheint das beschichtete Objekt für eine Schichtdickenmessung durchgehend und ausreichend scharf, so kann die Dickenmessung zu einem Zeitpunkt in dem gesamten Bildfeld erfolgen. In diesem Fall kann es vorteilhaft sein, die optische Weglänge zwischen dem Messarm und dem Referenzarm durch eine Bewegung des Referenzspiegels zu variieren.

Das Verfahren oder das optischen Messgerät lässt sich bevorzugt zur Bestimmung der Oberflächentopografie und der Schichtdicke von mit Kohlenstoff beschichteten Metalloberflächen verwenden. Solche so genannten C-Schichten werden häufig im Automotivbereich als Verschleißschutzschichten für hochpräzise Metallbauteile eingesetzt.

Die Erfindung wird im Folgenden anhand eines in den Figuren dargestellten Ausführungsbeispiels näher erläutert. Es zeigen:
Figur 1 ein optisches Messgerät zur Bestimmung der Oberflächentopografie von beschichteten Objekten und zur gleichzeitigen Bestimmung der Dicke der Schicht auf dem Objekt,
Figur 2 ein Strahlungsspektrum einer gemeinsamen Strahlungsquelle.

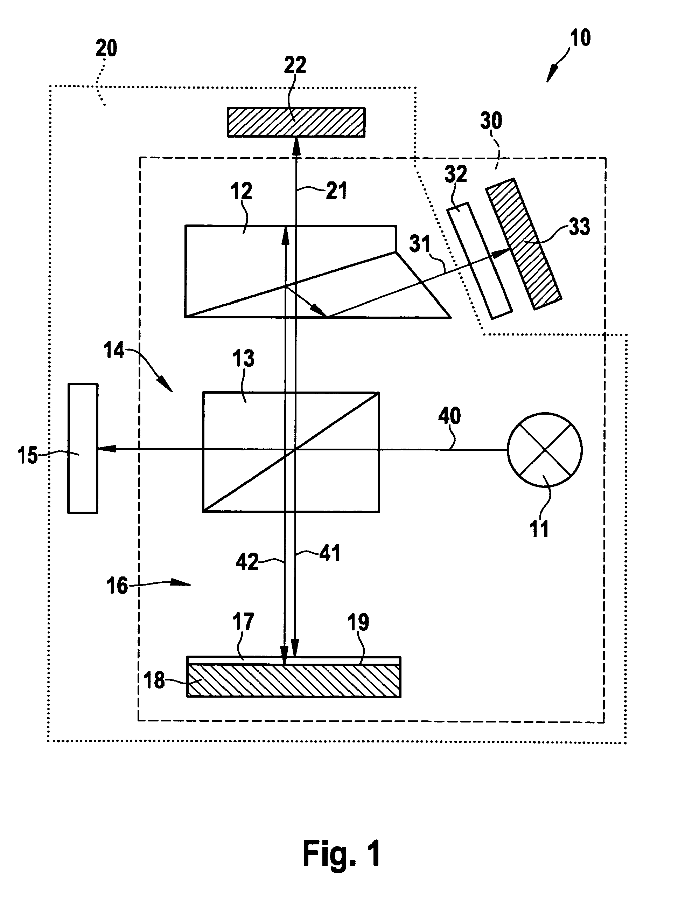

Figur 1 zeigt ein optisches Messgerät 10 zur Bestimmung der Oberflächentopografie von beschichteten Objekten 18 und zur gleichzeitigen Bestimmung der Dicke einer Schicht 17 auf dem beschichteten Objekt 18.

Das optische Messgerät 10 entspricht in seinem Grundaufbau einer Kombination aus einem Weißlichtinterferometer 20 und einem Reflektometer 30, deren jeweilige Komponenten in der Darstellung durch die Umrandungen eingegrenzt sind.

Elektromagnetische Strahlung 40 einer gemeinsamen Strahlungsquelle 11 wird von einem Strahlteiler 13 auf einen Referenzarm 14 und auf einen Messarm 16 aufgeteilt. Am Ende des Referenzarms 14 ist ein Referenzspiegel 15 angeordnet. Am Ende des Messarms 16 befindet sich das zu messende beschichtete Objekt 18 mit der dem Strahlengang zugewandten Schicht 17. Dabei ist das beschichtete Objekt 18 in dem dargestellten Ausführungsbeispiel ein Metallbauteil mit einer Kohlenstoffbeschichtung mit einer dazwischen liegenden Grenzfläche 19.

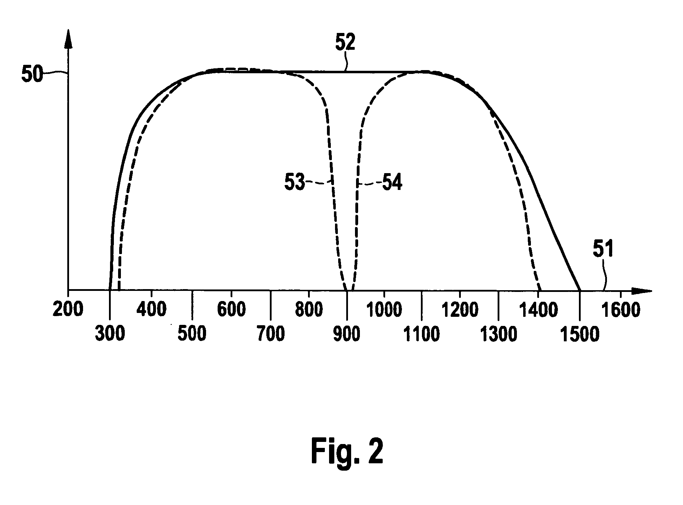

In dem Messarm 16 ist die elektromagnetische Strahlung 40 als ein erster Strahlungsanteil 41 und als ein zweiter Strahlungsanteil 42 dargestellt. Der erste Strahlungsanteil 41 entspricht einem in Figur 2 dargestellten ersten Wellenlängenbereich 51 und der zweite Strahlungsanteil 42 einem in Figur 2 dargestellten zweiten Wellenlängenbereich 52 des ebenfalls in Figur 2 dargestellten Strahlungsspektrums 52 der elektromagnetischen Strahlung 40.

Die in dem Referenzarm 14 geführte elektromagnetische Strahlung 40 beinhaltet ebenfalls nicht dargestellt den ersten Strahlungsanteil 41 und den zweiten Strahlungsanteil 42.

In dem weiteren Strahlungsverlauf wird die elektromagnetische Strahlung 40 mit dem ersten Strahlungsanteil 41 und dem zweiten Strahlungsanteil 42 einem ersten optischen Element 12 zugeführt. Das erste optische Element 12 ist als dichroitisches Prisma ausgeführt. In dem ersten optischen Element 12 wird der erste Strahlungsanteil 41 von dem zweiten Strahlungsanteil 42 getrennt. Der erste Strahlungsanteil 41 wird über einen ersten Strahlengang 21 einem zu dem Weißlichtinterferometer 20 gehörenden ersten Kamerachip 22 zugeführt. Der zweite Strahlungsanteil 42 wird über einen zweiten Strahlengang 31 einem zweiten optischen Element 32 und anschließend einem zweiten Kamerachip 33 zugeführt. Dabei sind das zweite optische Element 32 und der zweite Kamerachip 33 dem Reflektometer 30 zugeordnet. Das zweite optische Element 32 ist durch einen durchstimmbaren Filter gebildet, dessen wellenlängenabhängige Transmission sich zumindest innerhalb des zweiten Wellenlängenbereichs 54 einstellen lässt.

Figur 2 zeigt ein Strahlungsspektrum 52 der in Figur 1 dargestellten gemeinsamen Strahlungsquelle 11. Das Strahlungsspektrum 52 ist dazu in einem Diagramm, in welchem die Strahlungsintensität 50 gegenüber der Wellenlänge 51 aufgetragen ist, dargestellt. Das Strahlungsspektrum 52 setzt sich anteilig aus einem in Figur 1 dargestellten ersten Strahlungsanteil 41 in einem ersten Wellenlängenbereich 53 und einem ebenfalls in Figur 1 dargestellten zweiten Strahlungsanteil 42 in einem zweiten Weillenlängenbereich 54 zusammen.

Wie in Figur 1 dargestellt, ist der erste Wellenlängenbereich 53 des ersten Strahlungsanteils 41 so ausgelegt, dass er nicht in die Schicht 17 an dem beschichteten Objekt 18 eindringt, sondern von der Oberfläche der Schicht 17 reflektiert wird. Der zweite Wellenlängenbereich 54 des zweiten Strahlungsanteils 42 ist hingegen so an die optischen Eigenschaften der Schicht 17 angepasst, dass er zumindest zum Teil in die Schicht 17 eindringt und an der Grenzfläche 19 zwischen der Schicht 17 und dem beschichteten Objekt 18 reflektiert wird. Der restliche Anteil des zweiten Strahlungsanteils 42, der nicht in die Schicht 17 eindringt, wird an der Oberfläche der Schicht 17 reflektiert.

Die Bestimmung der Oberflächentopografie des beschichteten Objektes 18 erfolgt mittels Weißiichtinterferometrie mit dem an der Schichtoberfläche reflektierten ersten Strahlungsanteil 41. Der von der Schichtoberfläche reflektierte erste Strahlungsanteil 41 wird in dem Strahlteiler 13 mit der von dem Referenzspiegel 15 reflektierten elektromagnetischen Strahlung 40 überlagert und interferiert mit dem darin enthaltenen ersten Strahlungsanteil 41 des ersten Wellenlängenbereichs 53, wenn die optischen Weglängen innerhalb des Referenzarms 14 und des Messarms 16 im Bereich der Kohärenzlänge der elektromagnetischen Strahlung 40 des ersten Strahlungsanteils 41 gleich ist. Dieser interferierende erste Strahlungsanteil 41 wird in dem ersten optischen Element 12 von dem zweiten Strahlungsanteil 42 getrennt und über den ersten Strahlengang 21 dem ersten Kamerachip 22 zugeführt.

Um eine Messung durchzuführen wird die optische Weglänge in dem Referenzarm 14 oder in dem Messarm 16 durch eine nicht dargestellte Verschiebeeinheit variiert. Für die dargestellte Ausführungsvariante der Erfindung ist es dabei vorteilhaft, wenn die Position des beschichteten Objektes 18 verändert wird, weshalb sich die Beschreibung auf diese Ausführungsform bezieht. Es ist jedoch auch möglich, die Position des Referenzspiegels 15 oder die Position eines nicht dargestellten Objektivs zu verändern.

Durch die Veränderung der Position des beschichteten Objektes 18 durchlaufen die verschiedenen Bereiche der Oberfläche des beschichteten Objektes 18 in Abhängigkeit von der Tiefenstruktur der Oberfläche den Interferenzbereich oder den Fokusbereich des Weißlichtinterferometers 20. Für die Bereiche, die sich gerade in dem Interferenzbereich oder dem Fokusbereich des Weißlichtinterferometers 20 befinden, ergeben sich die konstruktiven oder destruktiven Interferenzen, wodurch es zu einer markanten Modulation der Intensität der Strahlung in den entsprechenden Abbildungsbereichen auf dem ersten Kamerachip 22 kommt.

Der erste Kamerachip 22 ist als CMOS-Kamera ausgebildet. CMOS-Kameras ermöglichen es, dass die einzelnen Pixel der Kamera einzeln angesteuert und ausgewertet werden können. Durch eine entsprechende Auswertesoftware können die Intensitätsschwankungen in den einzelnen Bildpunkten des ersten Kamerachips 22 analysiert werden. Dazu wird das Maximum der Intensitätsschwankung mit der Position der Verschiebeeinheit verrechnet. Je nach Präzision der Verschiebeeinheit können so die Höhenwert der auf den einzelnen Kamerapixeln abgebildeten Oberflächenbereiche des beschichteten Objektes 18 bis auf wenige Nanometer genau bestimmt werden.

Die Bestimmung der Dicke der Schicht 17 auf dem beschichteten Objekt 18 erfolgt nach dem Prinzip der Reflektometrie mit dem in die Schicht 17 eindringenden zweigen Strahlungsanteil 42. Der zweite Strahlungsanteil 42 dringt zu einem bestimmten, von den optischen Eigenschaften der Schicht 17 abhängenden Anteil in die Schicht 17 ein und wird an der Grenzfiäche 19 zum Substrat reflektiert. Der nicht in die Schicht 17 eindringende Anteil des zweiten Strahlungsanteils 42 wird von der Schichtoberfläche reflektiert. Die von der Grenzfläche 19 und der Schichtoberfläche reflektierten Anteile des zweiten Strahlungsanteils 42 interferieren in Abhängigkeit von der Schichtdicke, der jeweiligen Wellenlänge und den optischen Eigenschaften der Schicht 17 und der Grenzfläche 19. Dieser interferierende zweite Strahlungsanteil 42 wird in dem ersten optischen Element 12 von dem ersten Strahlungsanteil 41 getrennt und über den zweiten Strahlengang 31 dem zweiten optischen Element 32 und dem zweiten Kamerachip 33 zugeführt.

Um eine Messung durchzuführen wird die durch das zweite optische Element 32 transmittierte Wellenlänge des zweiten Strahlungsanteils 42 in dem zweiten Strahlengang 22 durch das zweite optische Element 32 gleichmäßig durchgestimmt. Über den durchstimmbaren Filter gelangen daher während eines Messzyklus nacheinander die verschiedenen Wellenlängen des zweiten Strahlungsanteils 42 zu dem zweiten Kamerachip 33. Beim gleichmäßigen Durchstimmen ändert sich periodisch das frequenzabhängige Intensitätssignal der einzelnen Bildpunkte auf dem zweiten Kamerachips 33. An Hand der Modulation lässt sich unter Berücksichtigung von spezifischen Schichteigenschaften, wie beispielsweise dem Brechungsindex der Schicht, die Schichtdicke bestimmen.

Die ortsaufgelöste Auswertung der einzelnen Abbildungsbereiche des beschichteten Objektes 18 auf dem zweiten Kamerachip 33 ermöglicht die flächige Zuordnung der Schichtdicken zu dem jeweiligen Oberflächenbereich des beschichteten Objektes 18. Dabei können die Informationen über die örtlich erfassten Schichtdicken mit den Ergebnissen der örtlich erfassten Höhenprofile aus der Weißlichtinterferometrie kombiniert werden.

Wird ein nicht dargestelltes Objektiv mit einer ausreichenden Schärfentiefe verwendet, so dass das gesamte Objekt ausreichend scharf auf dem zweiten Kamerachip 33 abgebildet wird, so kann die Schichtdickenmessung zu einem Zeitpunkt für das gesamte Bildfeld erfolgen.

Ansonsten erfolgt die Schichtdickenmessung jeweils für die Oberflächenbereiche des beschichteten Objektes 18, die sich im Fokusbereich des optischen Messgeräts 10 befinden. Dazu muss das zweite optische Element 32 aktiviert werden, sobald durch die Bewegung des beschichteten Objektes 18 ein neuer Bereich der Objektoberfläche in den Fokusbereich gelangt. Die Information, ob und welche Bereiche sich in dem Fokusbereich oder in dem Interferenzbereich des optischen Messgeräts 10 befinden, liegt über die interferenzmessung des Weißlichtinterferometers 20 vor. Dabei entspricht der Fokusbereich in der Regel dem Interferenzbereich des Weißlichtinterferometers 20. Die Auswertesoftware des Weißlichtinterferometers 20 ist vorteilhaft um eine Funktion erweitert, die ein Signal an das zweite optische Element 32 schickt und dieses aktiviert, sobald ein Interferenzsignal auftritt. Dadurch wird eine Schichtdickenmessung ausgelöst, sobald ein Oberflächenbereich des beschichteten Objektes 18 in den Fokusbereich des optischen Messgeräts 10 rückt.

Der zweite Kamerachip 33 ist ebenfalls als CMOS-Kamera ausgeführt, was auch hier eine separate Ansteuerung und Auswertung der einzelnen Pixel des zweiten Kamerachips 33 ermöglicht. Die Auswertung der Signale der einzelnen Pixel des zweiten Kamerachips 33 erfolgt über eine nicht dargestellte Schichtdickenanalysesoftware. Neben der Signalisierung an das zweite optische Element 32 durch die Auswertesoftware des Weißlichtinterferometers 20, dass sich ein Oberfiächebereich des beschichteten Objektes 18 in dem Interferenzbereich des Weißlichtinterferometers 20 und somit in dem Fokusbereich des optischen Messgeräts 10 befindet, kann die Auswertesoftware der Schichtdickenanalysesoftware übermitteln, weiche Bildpunkte sich in dem Fokusbereich befinden und welche Pixel des zweiten Kamerachips 33 bei der aktuellen Position des beschichteten Objektes 18 ausgewertet werden müssen. Damit kann vermieden werden, dass jeweils zeitaufwändig das gesamte Bildfeld ausgewertet werden muss.

Mit dem optischen Messgerät 10 kann somit mit Hilfe der Weißlichtinterferometrie durch eine flächenhafte Vermessung eine hochgenaue Form- und/oder Rauheitsmessung von beschichteten Oberflächen vorgenommen werden. In Kombination mit einer Schichtdickenmessung auf Basis der Reflektometrie können gleichzeitig wesentliche Schichtdickeninformationen gewonnen werden.

Je nach Transparenz der Schicht 17 muss der Wellenlängenbereich der gemeinsamen Strahlungsquelle 11, der für die Weißlichtinterferometrie verwendete erste Wellenlängenbereich 53 und der für die Reflektometrie verwendete zweite Wellenlängenbereich 54 angepasst werden. Dabei darf der für die Weißlichtinterferometrie vorgesehene erste Wellenlängenbereich 53 nicht in die Oberfläche eindringen, der für die Schichtdickenbestimmung vorgesehene zweite Wellenlängenbereich 54 muss eindringen.

Mit dem optischen Messgerät 10 können sehr schnell Oberflächen und Schichtdicken von beschichteten Objekten 18 in einem Arbeitsschritt hochgenau vermessen werden.

## Patentansprüche

1. Verfahren zur Bestimmung der Oberflächentopografie eines beschichteten Objektes (18) und zur gleichzeitigen ortsaufgelösten Bestimmung der Dicke der Schicht (17) auf dem beschichteten Objekt (18), wobei die Oberflächentopografie mittels Weißlichtinterferometrie und die Dicke der Schicht (17) nach dem Prinzip der Reflektometrie gemessen wird und für beide Messungen eine gemeinsame Strahlungsquelle (11) mit einem elektromagnetischen Strahlungsspektrum (52) verwendet wird, welches in einem in dem Strahlungsspektrum (52) enthaltenen ersten Wellenlängenbereich (53) von der Schichtoberfläche reflektiert wird und welches in einem in dem Strahlungsspektrum (52) enthaltenen zweiten Wellenlängenbereich (54) in die Schicht (17) eindringt, und die elektromagnetische Strahlung (40) des ersten und des zweiten Wellenlängenbereichs (53, 54) innerhalb eines als eine Kombination aus einem Weißlichtinterferometer(20) und einem Reflektometer (30) ausgeführten optischen Messgeräts (10) in gemeinsamen Strahlengängen in einem Messarm (16) zu dem beschichteten Objekt (18) und in einem Referenzarm (14) zu einem Referenzspiegel (15) geführt wird, und die von dem beschichteten Objekt (18) reflektierte elektromagnetische Strahlung (40) und die von dem Referenzspiegel (15) reflektierte elektromagnetische Strahlung (40) vereint und einem ersten optischen Element (12) zugeführt wird, **dadurch gekennzeichnet, dass** die Strahlung des ersten Wellenlängenbereichs (53) und des zweiten Wellenlängenbereichs (54) von dem ersten optischen Element (12) getrennt und in unterschiedliche Strahlengänge (21, 31) gelenkt wird, wobei die Strahlung des ersten Wellenlängenbereichs (53) in einem ersten Strahlengang (21) zur Messung der Oberflächentopologie und die Strahlung des zweiten Wellenlängenbereichs (54) in einem zweiten Strahlengang (31) zur Bestimmung der Schichtdicke vorgesehen ist.

2. Verfahren nach Anspruch 1, **dadurch gekennzeichnet, dass** der zu dem Weißlichtinterferometer (20) gehörende erste Strahlengang (21) des ersten Wellenlängenbereichs (53) einem ersten Kamerachip (22) und der zu dem Reflektometer (30) gehörende zweite Strahlengang (31) des zweiten Wellenlängenbereichs (54) einem zweiten Kamerachip (33) zugeführt wird.

3. Verfahren nach Anspruch 1 oder 2, **dadurch gekennzeichnet, dass** als erstes optisches Element (12) ein dichroitisches Prisma verwendet wird.

4. Verfahren nach einem der Ansprüche 1 bis 3, **dadurch gekennzeichnet, dass** die Wellenlänge der elektromagnetischen Strahlung (40) in dem zweiten Strahlengang (31) des zweiten Wellenlängenbereichs (54) vor dem zweiten Kamerachip (33) mit einem zweiten optischen Element (32) durchgestimmt wird.

5. Verfahren nach einem der Ansprüche 1 bis 4, **dadurch gekennzeichnet, dass** als zweites optisches Element (32) ein durchstimmbarer optischer Filter verwendet wird.

6. Verfahren nach einem der Ansprüche 1 bis 5, **dadurch gekennzeichnet, dass** bei der Bestimmung der Dicke der Schicht (17) optische Parameter der Schicht (17) berücksichtigt werden.

7. Verfahren nach einem der Ansprüche 1 bis 6, **dadurch gekennzeichnet, dass** das zweite optische Element (32) aktiviert wird, wenn durch die Veränderung der optischen Weglänge in dem Messarm (16) oder in dem Referenzarm (14) zumindest ein Punkt der Oberfläche des beschichteten Objektes (18) in den Fokusbereich oder in den Interferenzbereich des Weißlichtinterferometers (20) rückt.

8. Verfahren nach einem der Ansprüche 1 bis 7, **dadurch gekennzeichnet, dass** zur jeweilige Schichtdickenmessung nur die Pixel des zweiten Kamerachips (33) ausgewertet werden, auf die ein in dem Fokusbereich oder in dem Interferenzbereich des Weißlichtinterferometers (20) liegender Punkt der Oberflächen des beschichteten Objektes (18) abgebildet ist.

9. Verfahren nach einem der Ansprüche 1 bis 8, **dadurch gekennzeichnet, dass** die Bestimmung der Dicke der Schicht (17) zu einem Zeitpunkt über das gesamte Bildfeld erfolg.

10. Verfahren nach einem der Ansprüche 1 bis 9, **dadurch gekennzeichnet, dass** ein Strahlungsspektrum (52) in einem Wellenlängenbereich von 300nm bis 1500nm verwendet wird und dass für die Weißlichtinterferometrie der erste Wellenlängenbereich (53) zwischen 300nm und 900nm und für die Reflektometrie der zweite Wellenlängenbereich (54) zwischen 900nm und 1500nm verwendet wird.

11. Optisches Messgerät (10) zur Bestimmung der Oberflächentopografie eines beschichteten Objektes (18) und zur gleichzeitigen ortsaufgelösten Bestimmung der Dicke der Schicht (17) auf dem beschichteten Objekt (18), wobei das optische Messgerät (10) als Kombination aus einem Weißlichtinterferometer (20) und einem Reflektometer (30) mit einer gemeinsamen Strahlungsquelle (11) und einem gemeinsamen Messarm (16) aufgebaut ist, über den die elektromagnetische Strahlung (40) dem beschichteten Objekt (18) zugeführt ist, mit einer Strahlungsquelle (11), die ein elektromagnetisches Strahlungsspektrum (52) aufweist, welches in einem in dem Strahlungsspektrum (52) enthaltenen ersten Wellenlängenbereich (53) von der Schichtoberfläche reflektiert wird und welches in einem in dem Strahlungsspektrum (52) enthaltenen zweiten Wellenlängenbereich (54) zumindest teilweise in die Schicht (17) eindringt, **dadurch gekennzeichnet, dass** ein erstes optisches Element (12) zur Aufteilung der von dem beschichteten Objekt (18) und einem Referenzspiegel (15) reflektierten und anschließend überlagerten elektromagnetischen Strahlung (40) des ersten Wellenlängenbereichs (53) in einen ersten Strahlengang (21) zur Messung der Oberflächentopografie und des zweiten Wellenlängenbereichs (54) in einen zweiten Strahlengang (31) zur Bestimmung der Schichtdicke vorgesehen ist.

12. Optisches Messgerät (10) nach Anspruch 11, **dadurch gekennzeichnet, dass** die elektromagnetische Strahlung ((40) der Strahlungsquelle (11) einem Strahlteiler (13) zugeführt ist, dass nach dem Strahlteiler (13) ein erster Teil der elektromagnetischen Strahlung (40) in dem Messarm (16) dem beschichteten Objekt (18) und ein zweiter Teil der elektromagnetischen Strahlung (40) in einem Referenzarm (14) dem Referenzspiegel (15) zugeführt ist, dass die von dem beschichteten Objekt (18) und dem Referenzspiegel (15) reflektierte elektromagnetische Strahlung (40) in dem Strahlteiler (13) vereint und dem ersten optischen Element (12) zugeführt ist, dass die elektromagnetische Strahlung (40) des ersten Wellenlängenbereich (53) nach dem ersten optischen Element (12) einem ersten Kamerachip (22) zugeführt ist und dass die elektromagnetische Strahlung (40) des zweiten Wellenlängebereichs (54) nach dem ersten optischen Element (12) einem zweiten optischen Element (32) und anschließend einem zweiten Kamerachip (33) zugeführt ist.

13. Optisches Messgerät (10) nach Anspruch 11 oder 12, **dadurch gekennzeichnet, dass** das erste optische Element (12) ein dichroitisches Prisma ist und/oder dass das zweite optische Element (32) ein durchstimmbarer optischer Filter ist.

14. Optisches Messgerät (10) nach einem der Ansprüche 11 bis 13, **dadurch gekennzeichnet, dass** der erste Kamerachip (22) und/oder der zweite Kamerachip (33) als CMOS-Kamera ausgeführt ist.

15. Optisches Messgerät (10) nach einem der Ansprüche 11 bis 14, **dadurch gekennzeichnet, dass** der erste Kamerachip (22) für den ersten Wellenlängenbereich (53) und der zweite Kamerachip (33) für den zweiten Wellenlängenbereich (54) empfindlich ist.

16. Optisches Messgerät (10) nach einem der Ansprüche 11 bis 15, **dadurch gekennzeichnet, dass** eine Auswertesoftware zur Auswertung der Signaie des ersten Kamerachips (22) zur Bestimmung der Oberflächentopografie und eine Schichtdickenanalysesoftware zur Auswertung der Signale des zweiten Kamerachips (33) zur Bestimmung der Dicke der Schicht (18) vorgesehen ist und dass in der Auswertesoftware eine Funktion zur Aktivierung des zweiten optischen Elements (32) vorgesehen ist, wenn zumindest ein Bereich der Oberfläche des beschichten Objektes (18) in den Interferenzbereich oder in den Fokusbereich des Weißlichtinterferometers (20) rückt, und/oder dass in der Auswertesoftware eine Funktion zur Übertragung der Bildpunkte, welche sich in dem Interferenzbereich oder in dem Fokusbereich des Weißlichtinterferometers (20) befinden, an die Schichtdickenanalysesoftware vorgesehen ist.

17. Optisches Messgerät (10) nach einem der Ansprüche 11 bis 16, **dadurch gekennzeichnet, dass** zur Abbildung des beschichteten Objektes (18) ein Objektiv mit einer großen Schärfentiefe verwendet ist.

18. Verwendung des Verfahrens oder des optischen Messgerätes (10) nach einem der vorhergehenden Ansprüche zur Bestimmung der Oberflächentopografie und der Schichtdicke von mit Kohlenstoff beschichteten Metalloberflächen.

## Claims

1. Method for determining the surface topography of a coated object (18) and for simultaneously determining in a spatially resolved manner the thickness of the layer (17) on the coated object (18), wherein the surface topography is measured using white-light interferometry and the thickness of the layer (17) is measured according to the principle of reflectometry and used for both measurements is a common radiation source (11) with an electromagnetic radiation spectrum (52) which is reflected by the layer surface in a first wavelength range (53) contained in the radiation spectrum (52) and which penetrates the layer (17) in a second wavelength range (54) contained in the radiation spectrum (52), and the electromagnetic radiation (40) of the first and of the second wavelength range (53, 54) is guided in common beam paths in an optical measurement apparatus (10) which is configured as a combination of a white-light interferometer (20) and a reflectometer (30) to the coated object (18) in a measurement arm (16) and to a reference mirror (15) in a reference arm (14), and the electromagnetic radiation (40) reflected by the coated object (18) and the electromagnetic radiation (40) reflected by the reference mirror (15) is combined and guided to a first optical element (12), **characterized in that** the radiation of the first wavelength range (53) and of the second wavelength range (54) is separated by the first optical element (12) and is directed into different beam paths (21, 31), wherein the radiation of the first wavelength range (53) in a first beam path (21) is provided for measuring the surface topology and the radiation of the second wavelength range (54) in a second beam path (31) is provided for determining the layer thickness.

2. Method according to Claim 1, **characterized in that** the first beam path (21) of the first wavelength range (53), associated with the white-light interferometer (20), is guided to a first camera chip (22) and the second beam path (31) of the second wavelength range (54), associated with the reflectometer (30), is guided to a second camera chip (33).

3. Method according to Claim 1 or 2, **characterized in that** a dichroic prism is used as the first optical element (12).

4. Method according to one of Claims 1 to 3, **characterized in that** the wavelength of the electromagnetic radiation (40) in the second beam path (31) of the second wavelength range (54) is tuned upstream of the second camera chip (33) using a second optical element (32).

5. Method according to one of Claims 1 to 4, **characterized in that** a tunable optical filter is used as the second optical element (32).

6. Method according to one of Claims 1 to 5, **characterized in that** optical parameters of the layer (17) are taken into consideration when determining the thickness of the layer (17).

7. Method according to one of Claims 1 to 6, **characterized in that** the second optical element (32) is activated when, on account of the change in the optical path length in the measurement arm (16) or in the reference arm (14), at least one point of the surface of the coated object (18) moves into the focus region or into the interference region of the white-light interferometer (20).

8. Method according to one of Claims 1 to 7, **characterized in that**, for the respective layer thickness measurement, only those pixels of the second camera chip (33) are evaluated onto which a point of the surface of the coated object (18), which point is located in the focus region or in the interference region of the white-light interferometer (20), is imaged.

9. Method according to one of Claims 1 to 8, **characterized in that** the determination of the thickness of the layer (17) is effected at a time over the entire image field.

10. Method according to one of Claims 1 to 9, **characterized in that** a radiation spectrum (52) in a wavelength range of 300 nm to 1500 nm is used and **in that** the first wavelength range (53) between 300 nm and 900 nm is used for the white-light interferometry and the second wavelength range (54) between 900 nm and 1500 nm is used for the reflectometry.

11. Optical measurement apparatus (10) for determining the surface topography of a coated object (18) and for simultaneously determining in a spatially resolved manner the thickness of the layer (17) on the coated object (18), wherein the optical measurement apparatus (10) is constructed as a combination of a white-light interferometer (20) and a reflectometer (30) with a common radiation source (11) and a common measurement arm (16) via which the electromagnetic radiation (40) is guided to the coated object (18), having a radiation source (11) which has an electromagnetic radiation spectrum (52) that is reflected by the layer surface in a first wavelength range (53) contained in the radiation spectrum (52) and that at least partially penetrates the layer (17) in a second wavelength range (54) contained in the radiation spectrum (52), **characterized in that** a first optical element (12) is provided for splitting the electromagnetic radiation (40) of the first wavelength range (53), which is reflected by the coated object (18) and a reference mirror (15) and is subsequently superposed, into a first beam path (21) for measuring the surface topography and of the second wavelength range (54) into a second beam path (31) for determining the layer thickness.

12. Optical measurement apparatus (10) according to Claim 11, **characterized in that** the electromagnetic radiation (40) of the radiation source (11) is guided to a beam splitter (13), **in that**, after the beam splitter (13), a first portion of the electromagnetic radiation (40) in the measurement arm (16) is guided to the coated object (18) and a second portion of the electromagnetic radiation (40) in a reference arm (14) is guided to the reference mirror (15), **in that** the electromagnetic radiation (40) reflected by the coated object (18) and the reference mirror (15) is combined in the beam splitter (13) and guided to the first optical element (12), **in that** the electromagnetic radiation (40) of the first wavelength range (53) is guided, after the first optical element (12), to a first camera chip (22) and **in that** the electromagnetic radiation (40) of the second wavelength range (54) is guided, after a first optical element (12), to a second optical element (32) and subsequently to a second camera chip (33).

13. Optical measurement apparatus (10) according to Claim 11 or 12, **characterized in that** the first optical element (12) is a dichroic prism and/or **in that** the second optical element (32) is a tunable optical filter.

14. Optical measurement apparatus (10) according to one of Claims 11 to 13, **characterized in that** the first camera chip (22) and/or the second camera chip (33) is configured as a CMOS camera.

15. Optical measurement apparatus (10) according to one of Claims 11 to 14, **characterized in that** the first camera chip (22) is sensitive for the first wavelength range (53) and the second camera chip (33) is sensitive for the second wavelength range (54).

16. Optical measurement apparatus (10) according to one of Claims 11 to 15, **characterized in that** evaluation software for evaluating the signals of the first camera chip (22) is provided for determining the surface topography and layer-thickness analysis software is provided for evaluating the signals of the second camera chip (33) for determining the thickness of the layer (18) and **in that** a function for activating the second optical element (32) when at least a region of the surface of the coated object (18) moves into the interference region or into the focus region of the white-light interferometer (20) is provided in the evaluation software and/or **in that** a function for transferring the image points, which are located in the interference region or in the focus region of the white-light interferometer (20), to the layer-thickness analysis software is provided in the evaluation software.

17. Optical measurement apparatus (10) according to one of Claims 11 to 16, **characterized in that** an objective with a large depth of focus is used for imaging the coated object (18).

18. Use of the method or of the optical measurement apparatus (10) according to one of the preceding claims for determining the surface topography and the layer thickness of metal surfaces coated with carbon.

## Revendications

1. Procédé de détermination de la topographie de surface d'un objet revêtu (18) et de détermination simultanée de l'épaisseur de la couche (17) en chaque point de l'objet revêtu (18),
la topographie de surface étant mesurée par interférométrie en lumière blanche et l'épaisseur de la couche (17) étant mesurée selon le principe de la réflectométrie,
une source commune de rayonnement (11), dont le spectre (52) de rayonnement électromagnétique est réfléchi par la surface de la couche dans une première plage (53) de longueur d'onde que contient le spectre (52) du rayonnement et pénètre dans la couche (17) dans une deuxième plage (54) de longueur d'onde que contient le spectre (52) du rayonnement, étant utilisée pour les deux mesures,
le rayonnement électromagnétique (40) de la première et de la deuxième plage (53, 54) de longueur d'onde étant amené dans des parcours de faisceau communs vers l'objet revêtu (18) dans un bras de mesure (16) et vers un miroir de référence (15) dans un bras de référence (14) à l'intérieur d'un appareil de mesure optique (10) configuré comme combinaison d'un interféromètre (20) en lumière blanche et d'un réflectomètre (30),
le rayonnement électromagnétique (40) réfléchi par l'objet revêtu (18) et le rayonnement électromagnétique (40) réfléchi par le miroir de référence (15) étant réunis et amenés à un premier élément optique (12), **caractérisé en ce que**
les rayonnements de la première plage de longueur d'onde (53) et de la deuxième plage de longueur d'onde (54) sont séparés par le premier élément optique (12) et envoyés dans des parcours de faisceau (21, 31) différents,
le rayonnement de la première plage de longueur d'onde (53) étant prévu dans un premier parcours de faisceau (21) utilisé pour mesurer la topologie de surface et le rayonnement de la deuxième plage de longueur d'onde (54) étant prévu dans un deuxième parcours de faisceau (31) utilisé pour déterminer l'épaisseur de la couche.

2. Procédé selon la revendication 1, **caractérisé en ce que** le premier parcours de faisceau (21) de la première plage de longueur d'onde (53), qui fait partie de l'interféromètre (20) en lumière blanche, est apporté à une première puce de caméra (22) et le deuxième parcours de faisceau (31) de la deuxième plage de longueur d'onde (54), qui fait partie du réflectomètre (30), est apporté à une deuxième puce de caméra (33).

3. Procédé selon les revendications 1 ou 2, **caractérisé en ce qu'**il utilise comme premier élément optique (12) un prisme dichroïque.

4. Procédé selon l'une des revendications 1 à 3, **caractérisé en ce que** la longueur d'onde du rayonnement électromagnétique (40) présent dans le deuxième parcours de faisceau (31) de la deuxième plage de longueur d'onde (54) est ajustée à l'aide d'un deuxième élément optique (32) en amont de la deuxième puce de caméra (33).

5. Procédé selon l'une des revendications 1 à 4, **caractérisé en ce qu'**il utilise comme deuxième élément optique (32) un filtre optique variable.

6. Procédé selon l'une des revendications 1 à 5, **caractérisé en ce que** des paramètres optiques de la couche (17) sont pris en compte dans la détermination de l'épaisseur de la couche (17).

7. Procédé selon l'une des revendications 1 à 6, **caractérisé en ce que** le deuxième élément optique (32) est activé si la modification de la longueur du parcours optique dans le bras de mesure (16) ou dans le bras de référence (14) repousse au moins un point de la surface de l'objet revêtu (18) dans la plage de focalisation ou dans la plage d'interférence de l'interféromètre (20) en lumière blanche.

8. Procédé selon l'une des revendications 1 à 7, **caractérisé en ce que** pour chaque mesure d'épaisseur de couche, seuls les pixels de la deuxième puce de caméra (33) sur lesquels un point de la surface de l'objet revêtu (18) situé dans la plage de focalisation ou dans la plage d'interférence de l'interféromètre (20) en lumière blanche a son image formée sont évalués.

9. Procédé selon l'une des revendications 1 à 8, **caractérisé en ce que** la détermination de l'épaisseur de la couche (17) s'effectue à un instant donné sur tout le champ d'image.

10. Procédé selon l'une des revendications 1 à 9, **caractérisé en ce qu'**il utilise un spectre (52) de rayonnement dans une plage de longueur d'onde de 300 nm à 1 500 nm et **en ce que** pour l'interférométrie en lumière blanche, il utilise la première plage (53) de longueur d'onde comprise entre 300 nm et 900 nm et pour la réflectométrie la deuxième plage (54) de longueur d'onde située entre 900 nm et 1 500 nm.

11. Appareil optique (10) destiné à déterminer la topographie de surface d'un objet revêtu (18) et simultanément à déterminer l'épaisseur de la couche (17) en chaque point de l'objet revêtu (18),
l'appareil optique (10) étant configuré comme combinaison d'un interféromètre (20) en lumière blanche et d'un réflectomètre (30) une source commune (11) de rayonnement et un bras commun de mesure (16) par lequel le rayonnement électromagnétique (40) est apporté à l'objet revêtu (18) et présentant une source de rayonnement (11) dont le spectre (52) de rayonnement électromagnétique est réfléchi par la surface de l'objet dans une première plage (53) de longueur d'onde que contient le spectre de rayonnement (52) et pénètre au moins en partie dans la couche (17) dans une deuxième plage (54) de longueur d'onde que contient le spectre de rayonnement (52),
**caractérisé en ce que**
un premier élément optique (12) est prévu pour diviser, dans un premier parcours de faisceau (21) servant à mesurer la topographie de surface, le rayonnement électromagnétique (40) de la première plage (53) de longueur d'onde réfléchi par l'objet revêtu (18) et par un miroir de référence (15) et ensuite superposé et, dans un deuxième parcours de faisceau (31) servant à déterminer l'épaisseur de la couche, le rayonnement électromagnétique de la deuxième plage de longueur d'onde (54).

12. Appareil de mesure optique (10) selon la revendication 11, **caractérisé en ce que** le rayonnement électromagnétique (40) de la source de rayonnement (11) est apporté à un diviseur de faisceau (13), **en ce qu'**une première partie du rayonnement électromagnétique (40) est amenée en aval du diviseur de faisceau (13) dans le bras de mesure (16) à l'objet revêtu (18) et une deuxième partie du rayonnement électromagnétique (40) est apportée dans un bras de référence (14) au miroir de référence (15), **en ce que** le rayonnement électromagnétique (40) réfléchi par l'objet revêtu (18) et le miroir de référence (15) sont réunis dans le diviseur de faisceau (13) et sont apportés au premier élément optique (12), **en ce que** le rayonnement électromagnétique (40) de la première plage de longueur d'onde (53) est apporté en aval du premier élément optique (12) à une première puce de caméra (22) et **en ce que** le rayonnement électromagnétique (40) de la deuxième plage de longueur d'onde (54) est amené en aval du premier élément optique (12) à un deuxième élément optique (32) et ensuite à une deuxième puce de caméra (33).

13. Appareil de mesure optique (10) selon les revendications 11 ou 12, **caractérisé en ce que** le premier élément optique (12) est un prisme dichroïque et/ou **en ce que** le deuxième élément optique (32) est un filtre optique ajustable.

14. Appareil de mesure optique (10) selon l'une des revendications 11 à 13, **caractérisé en ce que** la première puce de caméra (22) et/ou la deuxième puce de caméra (33) sont configurées comme caméras CMOS.

15. Appareil de mesure optique (10) selon l'une des revendications 11 à 14, **caractérisé en ce que** la première puce de caméra (22) est sensible à la première plage de longueur d'onde (53) et la deuxième puce de caméra (33) est sensible à la deuxième plage de longueur d'onde (54).

16. Appareil de mesure optique (10) selon l'une des revendications 11 à 15, **caractérisé en ce qu'**un logiciel d'évaluation qui sert à évaluer les signaux de la première puce de caméra (22) en vue de déterminer la topographie de surface et un logiciel d'analyse d'épaisseur de couche qui évalue les signaux de la deuxième puce de caméra (33) pour évaluer l'épaisseur de la couche (18) sont prévus et **en ce que** le logiciel d'évaluation présente une fonction d'activation du deuxième élément optique (32) si au moins une partie de la surface de l'objet revêtu (18) pénètre dans la plage d'interférence ou dans la plage de focalisation de l'interféromètre (20) en lumière blanche et/ou **en ce que** le logiciel d'évaluation présente une fonction de transfert des points d'image qui sont situés dans la plage d'interférence ou dans la plage de focalisation dans l'interféromètre (20) en lumière blanche, est prévu dans le logiciel d'analyse d'épaisseur de couche.

17. Appareil de mesure optique (10) selon l'une des revendications 11 à 16, **caractérisé en ce qu'**un objectif à haute profondeur de champ est utilisé pour former l'image de l'objet revêtu (18).

18. Utilisation du procédé ou de l'appareil de mesure optique (10) selon l'une des revendications précédentes pour déterminer la topographie de surface et l'épaisseur de couche de surfaces métalliques revêtues de carbone.
